# EUROPÄISCHE PATENTSCHRIFT

(11) **EP 2 653 415 B1**
(45) Veröffentlichungstag und Bekanntmachung des Hinweises auf die Patenterteilung: **05.11.2014**
(21) Anmeldenummer: 12002761.0
(22) Anmeldetag: 20.04.2012
(51) Int. Cl.: B65G 47/90, B25J 15/00, B25J 15/10

(54) **Greifeinrichtung zum Greifen von Objekten**
Gripper device for gripping objects
Dispositif de saisie destiné à saisir des objets

(43) Veröffentlichungstag der Anmeldung: 23.10.2013
(73) Patentinhaber: Festo AG & Co. KG, 73734 Esslingen (DE)
(72) Erfinder: Thallemer, Axel, 80796 München (DE); Danzer, Martin, 84069 Schierling (DE); Rogler, Bernhard, 5020 Salzburg (AT)
(74) Vertreter: Vogler, Bernd

(56) Entgegenhaltungen:
- DE-U1- 9 005 727
- US-A- 3 901 547
- US-A- 4 918 991
- US-A- 5 762 390

## Beschreibung

Die Erfindung betrifft eine Greifeinrichtung zum Greifen von Objekten nach dem Oberbegriff des Anspruchs 1.

Greifeinrichtungen auf Basis kinematischer Ketten sind bereits seit langem bekannt. Als Beispiele sind Greifer zu nennen, die auf dem Prinzip der Watt'schen oder Stephenson'schen Kopplung basieren. Bei einer Watt'schen Kette handelt es sich um eine sechsgliedrige kinematische Kette mit einem Freiheitsgrad. Die Watt'sche Kette weist zwei starre Dreiecke auf, die jeweils ein Getriebeglied eines Gelenkgetriebes bilden. Die starren Dreiecke sind jeweils aus drei zueinander ortsfest angeordneten Gelenken aufgespannt, wobei die beiden starren Dreiecke im Fall der Watt'schen Kette über ein Gelenk miteinander gekoppelt sind, d.h. ein Gelenk des einen starren Dreiecks ist auch ein Gelenk des anderen starren Dreiecks. Es handelt sich also hierbei um eine Dreieckskopplung an einem Punkt.

Bei der Stephenson'sche Kette handelt es sich ebenfalls um eine sechsgliedrige kinematische Kette. Hier sind ebenfalls zwei starre Dreiecke vorgesehen, die jedoch im Unterschied zur Watt'schen Kette über eine Strecke, d.h. über ein weiteres Getriebeglied miteinander gekoppelt sind.

Gelenkgetriebe, die als Watt'sche oder Stephenson'sche Kette gebildet sind, erzeugen eine definierte Greifbewegung.

Das Dokument US 3 901 547 A offenbart eine Greifeinrichtung nach dem Oberbegriff des Anspruchs 1.

Aufgabe der Erfindung ist es, eine Greifeinrichtung der eingangs erwähnten Art zu schaffen, die gegenüber der aus dem Stand der Technik bekannten Greifeinrichtungen bezüglich der Greifbewegung variabler und somit flexibler einsetzbar ist.

Diese Aufgabe wird durch eine Greifeinrichtung mit den Merkmalen des unabhängigen Anspruchs 1 gelöst. Weiterbildungen der Erfindung sind in den Unteransprüchen dargestellt.

Die erfindungsgemäße Greifeinrichtung zeichnet sich dadurch aus, dass die Greifelemente über eine Schwenksteuerung derart ansteuerbar sind, dass bei einer Greifbewegung der Gelenkeinheit wahlweise eine relative Verschwenkung zwischen Greifelement und Getriebeglied blockiert oder ermöglicht ist, wobei in letztgenanntem Fall insbesondere eine Verschwenkung zwischen Greifelement und zugeordnetem Getriebeglied derart möglich ist, dass das Greifelement nach Art einer Parallelverschiebung ohne Änderung der Orientierung bezüglich des Greifzentrums verschwenkbar ist. Mit einer derartigen Schwenksteuerung lassen sich wahlweise Parallel- oder Radialgriffe durchführen. Sind die Schwenkbewegungen der Greifelemente blockiert, so erhält man einen Radialgriff, d.h. die aktive Wirkfläche am Greifelement ändert ihre Orientierung bezüglich des Greifzentrums. Soll ein Parallelgriff durchgeführt werden, erfordert dies ein Verschwenken des Greifelements relativ zum zugeordneten Getriebeglied der Gelenkeinheit, wodurch die Orientierung der aktiven Wirkfläche während der Greifbewegung konstant bleibt, also sich bezüglich des Greifzentrums nicht ändert.

Im Gegensatz zu den zuvor genannten Greifeinrichtungen aus dem Stand der Technik ist mit einer derartigen Greifeinrichtung ein Raumgriff möglich, wodurch besonders räumliche Objekte, also Körper, zuverlässig gegriffen werden können. Die Ausrichtung der Gelenkeinheiten derart, dass die Arbeitsebenen radial verlaufen erlaubt einen zentrischen Raumgriff. Darüber hinaus ist auch das Greifen flächiger Objekte möglich, falls die Gelenkeinheiten derart um das Greifzentrum herum gruppiert sind, dass die Arbeitsebenen parallel versetzt zueinander ausgerichtet sind. Das zuverlässige Greifen wird einerseits durch die räumliche Gruppierung der Gelenkeinheiten um das Greifzentrum und zum anderen durch die synchronisierte Greifbewegung der Greifelemente bewirkt. Um einen Raumgriff zu erzielen, sind wenigstens drei Gelenkeinheiten notwendig.

Bei einer Weiterbildung der Erfindung sind die wenigstens drei Gelenkeinheiten gleichmäßig verteilt um das Greifzentrum herum gruppiert, was einen über den Umfang des zu greifenden Objekts gleichmäßigen Raumgriff bewirkt. Je nach Ausgestaltung des zu greifenden Objekts ist prinzipiell jedoch auch eine nicht gleichmäßige Verteilung der Gelenkeinheiten um das Greifzentrum herum denkbar. Eine gleichmäßige Verteilung der Gelenkeinheiten bietet sich vor allem bei rotationssymmetrischen Objekten an, wobei eine ungleichmäßige Verteilung eher bei asymmetrischen Objekten einzusetzen ist.

Bei einer Weiterbildung der Erfindung bilden einander benachbarte Gelenkeinheiten gemeinsam eine Art Watt'sche oder Stephenson'sche Kette im Hinblick auf Anzahl der Getriebeglieder und der Gelenke. Bei Watt'schen oder Stephenson'schen Greifern sind sechs Getriebeglieder vorgesehen, die über sieben Gelenke miteinander verbunden sind. Im Unterschied zu dem reinen Watt'schen oder Stephenson'schen Greifer fallen die Arbeitsebenen einander benachbarten Gelenkeinheiten nicht zusammen, wodurch ein ebener Greifer geschaffen wird, sondern sind räumlich verteilt, verlaufen also radial oder parallel versetzt zueinander.

In besonders bevorzugter Weise sind genau drei Gelenkeinheiten vorgesehen, die gemeinsam eine Art Dreistandskoppelgetriebe bilden.

In besonders bevorzugter Weise bilden die beiden Getriebeglieder und die drei Gelenke einer jeweiligen Gelenkeinheit gemeinsam einen Kniehebeltrieb, wobei von den Gelenken eines als mittleres Gelenk zur gelenkigen Verbindung der beiden Getriebeglieder und die beiden anderen Getriebeglieder als äußere Gelenke zur gelenkigen Anbindung an andere Komponenten der Greifeinrichtung ausgebildet sind, wobei bei Einleitung einer Antriebskraft der Abstand der beiden äußeren Gelenke zueinander veränderbar ist.

Zweckmäßigerweise ist von den äußeren Gelenken eines ortsfest und das andere relativ zu diesem beweglich angeordnet. Bei Einleitung einer Antriebskraft kann sich also das beweglich angeordnete äußere Gelenk von dem anderen äußeren Gelenk weg oder auf dieses zubewegen. Hierbei knickt der aus den beiden Getriebegliedern gebildete Kniehebel ein oder aus, wodurch das zugeordnete Greifelement auf das zu greifende Objekt zu oder von diesem wegbewegt wird.

Es ist möglich, dass den Gelenkeinheiten Positioniermittel zugeordnet sind, mit deren Hilfe sich die Gelenkeinheiten derart zueinander und bezüglich des Greifzentrums gruppieren lassen, dass die Arbeitsebenen der Greifelemente wahlweise radial oder parallel versetzt zueinander verlaufen. Im erstgenannten Fall wird ein zentrischer Raumgriff und im letztgenannten Fall ein paralleler Raumgriff ermöglicht. Beispielsweise ist es möglich, dass wenigstens zwei Gelenkeinheiten um eine parallel zur Längsachse des Greifzentrums verlaufende Schwenkachse verschwenkbar sind.

Es ist möglich, dass die Greifelemente der Gelenkeinheiten mittels der Schwenksteuerung gemeinsam angesteuert werden. Zweckmäßigerweise ist es jedoch, dass die Greifelemente unabhängig voneinander ansteuerbar sind.

In besonders bevorzugter Weise weist die Schwenksteuerung wenigstens einen Schwenkantrieb zur Einleitung einer Schwenkbewegung auf das wenigstens eine Greifelement auf, wobei vorzugsweise jedem Greifelement ein Schwenkantrieb zugeordnet ist. Der wenigstens eine Schwenkantrieb ist also zweckmäßigerweise an Bord der Greifeinrichtung. Zweckmäßigerweise sind mehrere Schwenkantriebe an Bord der Greifeinrichtung vorgesehen, die in bevorzugter Weise an der jeweiligen Gelenkeinheit angeordnet sind.

Bei einer Weiterbildung der Erfindung ist der Greifantrieb im Greifzentrum angeordnet.

In besonders bevorzugter Weise handelt es sich bei dem Greifantrieb und/oder dem wenigstens einen Schwenkantrieb um einen Linearantrieb. Es ist jedoch auch möglich, Drehantriebe zu Verwenden, deren rotatorische Antriebsbewegung dann über geeignete Umsetzmittel in eine lineare Abtriebsbewegung übersetzbar ist.

In besonders bevorzugter Weise handelt es sich bei dem Linearantrieb um einen Kontraktionsantrieb. Der Kontraktionsantrieb besitzt in bevorzugter Weise zwei Kopfstücke, zwischen denen ein sich bei Innendruckbeaufschlagung kontrahierender Kontraktionsschlauch angeordnet ist. Der Schlauchkörper des Kontraktionsschlauchs ist mit integrierten Zugsträngen versehen. Alternativ oder zusätzlich zum als Kontraktionsantrieb ausgebildeten Schwenkantrieb kann auch ein mechanischer Antrieb als Schwenkantrieb eingesetzt werden. Ein solcher mechanischer Antrieb kann beispielsweise den Gelenkeinheiten zugeordnete starre Schubstangen aufweisen, mit denen insbesondere manuell zwischen radialem Greifen oder parallelem Greifen umgeschaltet werden kann. Hierzu können beispielsweise den Schubstangen jeweils zwei Anlenkpositionen zugeordnet sein, eine für den radialen Griff und die andere für den parallelen Griff.

Bei einer Weiterbildung der Erfindung bestehen die Komponenten des Gelenkgetriebes zumindest teilweise aus Leichtbaumaterial. Das Leichtbaumaterial kann ein Metallmaterial oder Kunststoffmaterial sein. Im Falle von Metallmaterial eignen sich beispielsweise Aluminium, Magnesium oder deren Legierungen. Es ist möglich, eine Kombination verschiedener Materialien zu verwenden.

In besonders bevorzugter Weise weist wenigstens ein Getriebeglied einer jeweiligen Gelenkeinheit insbesondere schwammartige Material-Ausmagerungen auf. Dadurch lässt sich das Gewicht der Greifeinrichtung beträchtlich reduzieren. Zweckmäßigerweise sind die Material-Ausmagerungen in Kraftflussrichtung der mittels des Antriebs erzeugten Greifkraft ausgerichtet.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels der erfindungsgemäßen Greifeinrichtung in Greifstellung und
- Figur 2: die Greifeinrichtung von Figur 1 in Freigabestellung.

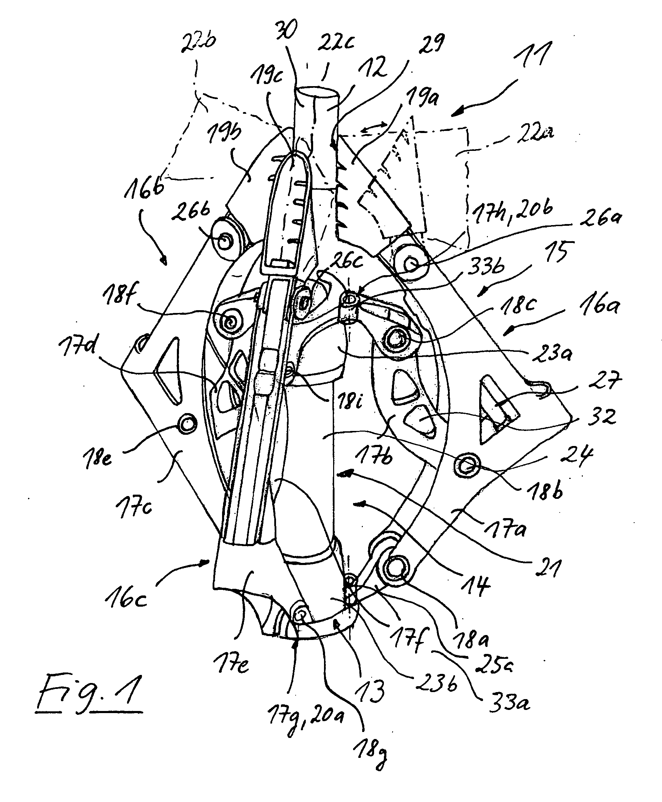

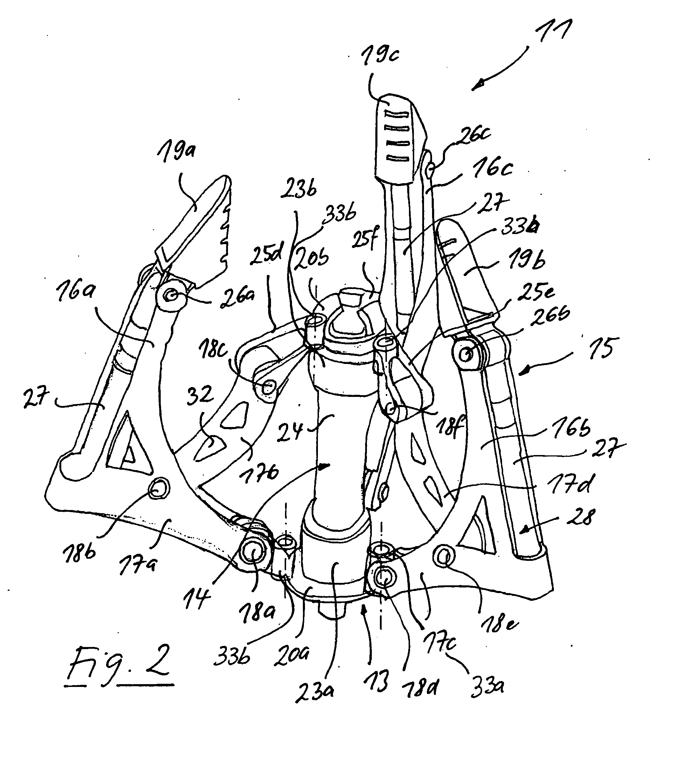

Die Figuren 1 und 2 zeigen ein bevorzugtes Ausführungsbeipiel der erfindungsgemäßen Greifeinrichtung 11. Die Greifeinrichtung 11 dient zum Greifen von Objekten 12 unterschiedlicher Art, wobei gemäß dem bevorzugten Ausführungsbeispiel insbesondere räumliche Objekte 12 vorgesehen sind, da die Greifeinrichtung 11, wie nachstehend noch erläutert, mit einem Raumgriff greift.

Die Greifeinrichtung 11 befindet sich in der Regel an einem Handhabungsgerät (nicht dargestellt), das auch als Greiferführungsgetriebe bezeichnet werden kann. Die Hauptaufgabe der Greifeinrichtung 11 sind das Herstellen, Aufrechterhalten und Lösen der Verbindung zwischen dem Objekt 12 und dem Handhabungsgerät. Je nach Anwendungsfall kommen zusätzliche Sonderfunktionen wie Änderung der Position des Objekts, Änderung der Orientierung des Objekts und/oder Informationsaufnahme von Objekteigenschaften oder anderen Eigenschaften, beispielsweise mit Hilfe von Sensoren hinzu. Es können beispielsweise Anwesenheitskontrolle und Lageerkennung für Objekte, sowie Kraft-, Moment- und Wegmessungen durchgeführt werden.

Die Greifeinrichtung 11 besitzt wenigstens eine, im Beispielsfall eine einzige Krafteinleitungsschnittstelle 13, an der ein Greifantrieb 14 zur Greifkrafterzeugung ankoppelbar oder angekoppelt ist. Die Greifeinrichtung 11 umfasst ferner ein Gelenkgetriebe 15, das mehrere Gelenkeinheiten 16a, 16b, 16c aufweist, die jeweils zwei Getriebeglieder 17a-17h und drei Gelenke 18a-18i aufweisen. Das Gelenkgetriebe 15 dient zur Übertragung der Greifkraft und der Greifbewegung auf wenigstens ein auf das zu greifende Objekt 12 beim Greifen einwirkendes Greifelement 19a, 19b, 19c.

Die Greifeinrichtung 11 ist beispielhaft anhand eines aus genau drei Gelenkeinheiten bestehenden Gelenkgetriebes 15 erläutert. Diese Anordnung bildet eine Art Dreistandskoppelgetriebe.

Die Greifeinrichtung 11 besitzt ferner noch zwei Basisteile 20a, 20b, nämlich ein unteres Basisteil 20a und ein oberes Basisteil 20b, die in einem Greifzentrum 21 der Greifeinrichtung 11 angeordnet sind, und an denen jeweils die Gelenkeinheiten 16a-16c in nachfolgend noch beschriebener Weise angelenkt sind.

Wie insbesondere in den Figuren 1 und 2 dargestellt, sind die drei Gelenkeinheiten 16a-16c des Gelenkgetriebes 15 derart um das Greifzentrum 21 herum gruppiert, dass die wenigstens drei Arbeitsebenen 22a-22c ihrer Greifelemente 19a-19c winkelig und radial bezüglich des Greifzentrum 21 ausgerichtet sind. Die Gelenkeinheiten 16a-16c sind derart mechanisch miteinander gekoppelt, dass die Greifelemente 19a-19c in ihren Schwenkbewegungen synchronisiert sind.

Wie insbesondere in den Figuren 1 und 2 dargestellt ist der Greifantrieb 14 im Greifzentrum 21 angeordnet. Bei dem Greifantrieb 14 handelt es sich um einen Linearantrieb in Form eines Kontraktionsantriebs. Der Kontraktionsantrieb besitzt zwei einander entgegengesetzte Kopfstücke 23a, 23b, zwischen denen ein sich durch Innendruckbeaufschlagung kontrahierender Kontraktionsschlauch 24 eingespannt ist. In den Schlauchkörper des Kontraktionsschlauchs 24 sind Zugstränge integriert, die bewirken, dass sich der Kontraktionsschlauch 24 bei Innendruckbeaufschlagung kontrahiert, also zusammenzieht. Im Beispielsfall ist das untere Kopfstück 23a an dem unteren Basisteil 20a ortsfest gelagert. Das entgegengesetzte andere, obere Kopfstück 23b ist hingegen am oberen Basisteil 20b befestigt. Der Kontraktionsantrieb ist über einen Druckluftanschluss an eine Druckluftquelle angeschlossen, so dass er bei Bedarf mit Druck beaufschlagbar ist. Die Innendruckbeaufschlagung des Kontraktionsschlauchs 24 bewirkt eine Kontraktion, wobei sich der Kontraktionsschlauch 24 verkürzt und sich das obere Kopfstück 23b an das untere Kopfstück 23a annähert. Die Druckluftzuführung erfolgt über das untere Basisteil 20a. Eine derartige zentrale Druckluftzuführung hat den Vorteil, dass keine aufwändigen Verschlauchungen notwendig sind. Zur Druckluftbeaufschlagung kann der Kontraktionsschlauch beispielsweise mit einem Druckluftzuführrohr (nicht dargestellt) durchsetzt sein, das radiale Öffnungen besitzt, über die Druckluft in den Innenraum des Kontraktionsschlauchs 24 gelangt. Dieses Druckluftzuführrohr ist über eine entsprechende Öffnung am unteren Basisteil 20a in den Kontraktionsschlauch 24 eingeführt.

Wie insbesondere in den Figuren 1 und 2 dargestellt, besitzen die Basisteile 20a, 20b jeweils drei Lagerarme 25a-25c, die gleichmäßig verteilt am Außenumfang der Basisteile 20a, 20b abragen. Im Falle des unteren Basisteils 20a stehen die drei Lagerarme 25a-c nach radial außen und oben, während im Falle des oberen Basisteils 20b die drei Lagerarme nach radial außen und unten abragen. Die Lagerarme 25a-25c sind jeweils über ein Gelenk 18a, 18c, 18d, 18f, 18g, 18i mit einem zugeordneten Getriebeglied 17a, 17b, 17c, 17d, 17e, 17f schwenkbar verbunden.

Wie insbesondere in Figur 1 nachfolgend beispielhaft anhand einer Gelenkeinheit 16a beschrieben (der Aufbau bei den beiden anderen Gelenkeinheiten 16b, 16c ist identisch), ist das mit dem unteren Lagerarm 25a verbundene Getriebeglied 17a über ein weiteres, mittleres Gelenk 18b mit dem zweiten Getriebeglied 17b der Gelenkeinheit 16a schwenkbar verbunden. Die beiden an den Lagerarmen befindlichen Gelenke 18a, 18c bilden dabei die äußeren Gelenke. Das untere Getriebeglied 17a ist über das mittlere Gelenk 18b hinaus verlängert, wobei an dem äußeren Ende dieses Getriebeglieds 17a das zugeordnete Greifelement 19a sitzt. Die Anordnung bzw. Befestigung des Greifelements 19a erfolgt über ein Schwenkgelenk 26a-26c, wodurch das Greifelement 19a-19c um dieses Schwenkgelenk schwenkbar an dem zugeordneten Getriebeglied 17a schwenkbar gelagert ist.

Wie in Figur 1 und 2 zu erkennen, sind zwei der drei Gelenkeinheiten 16a und 16b jeweils um eine parallel zur Längsachse des Greifzentrums ausgerichtete Schwenkachse schwenkbar gelagert. Hierzu sind je betroffener Gelenkeinheit 16a und 16b jeweils zwei Gelenke 33a, 33b vorgesehen, von denen eines am oberen und das andere am unteren Basisteil 20a, 20b angeordnet ist.

Das Greifelement 19a ist über eine Schwenksteuerung 27 ansteuerbar. Hierzu ist ein Schwenkantrieb 27 vorgesehen, der in einer hierfür vorgesehenen Antriebsaufnahme 28 im mit dem Greifelement 19a bestückten Getriebeglied 17a angeordnet ist. Der Schwenkantrieb 27 ist ebenfalls als Linearantrieb und insbesondere als Kontraktionsantrieb ausgebildet. Der Aufbau entspricht dem zuvor beschriebenen Greifantrieb 14. Das obere Kopfstück des Schwenkantriebs 27 ist über Kopplungsmittel an das Schwenkgelenk 26a des Greifelements 19a angekoppelt, wodurch bei Innendruckbeaufschlagung des Kontraktionsschlauchs des Schwenkantriebs eine Verschwenkung des Greifelements 19a relativ zu dem zugeordneten Getriebeglied 17a stattfindet.

Die Funktionsweise der Greifeinrichtung 11 ist folgendermaßen zu beschreiben:
Figur 1 zeigt die Greifeinrichtung 11 in ihrer Greifstellung, wobei die aktiven Wirkflächen 29 der Greifelemente 19a-19c an die entsprechende passive Wirkfläche 30 am Umfang des gegriffenen Objekts 12, im Beispielsfall ein Zylinderkörper, anliegen. Wie ebenfalls in Figur 1 gezeigt, sind die drei Gelenkeinheiten 16a-16c in gleichmäßigen Abständen um das Greifzentrum 21 herum gruppiert, wodurch sich ein zentrischer Raumgriff der Greifeinrichtung 11 erzielen lässt. Die aktiven Wirkflächen 29 der Greifelemente 19a sind parallel zum Greifzentrum bzw. Längsachse 31 des Greifantriebs 14 ausgerichtet.

Um die Greifeinrichtung zu öffnen, d.h. die Gelenkeinheiten 16a-16c in die Freigabestellung zu bewegen, so dass das gegriffene Objekt freigegeben wird, wird der Greifantrieb 14 mit Druckluft beaufschlagt. Die Druckluft wird über das zuvor beschriebene Druckluftzuführrohr zugeführt und gelangt über dieses in den Innenraum des Kontraktionsschlauchs 24 des als Kontraktionsantrieb ausgebildeten Greifantriebs 14. Die Innendruckbeaufschlagung des Kontraktionsschlauchs 24 bewirkt eine Kontraktion des Kontraktionsschlauchs 24, so dass das obere Kopfstück 23b und mit diesem das obere Basisteil 20b an das untere Kopfstück 23a und das untere Basisteil 20a angenähert wird. Gleichzeitig nähern sich die jeweiligen oberen äußeren Gelenke der Gelenkeinheiten 16a-16c an die unteren äußeren Gelenke an. Dabei knicken die als Kniehebel ausgestalteten Gelenkeinheiten am mittleren Gelenk aus, wodurch die Greifelemente 19a-19c nach radial außen bewegt werden.

Um dafür zu sorgen, dass sich die aktiven Wirkflächen 29 der Greifelemente 19a-19c beim Schließen aus der in Figur 2 gezeigten Freigabestellung in die in Figur 1 dargestellte Greifstellung in ihrer Orientierung bezüglich der Längsachse 31 des Greifantriebs 14 nicht ändern, wird die Greifbewegung, also die Verlagerung der Greifelemente nach radial innen von einer Schwenkbewegung der Greifelemente 19a-19c um die zugeordneten Schwenkgelenke 26a-26c überlagert. Hierzu werden die ebenfalls als Kontraktionsantrieb ausgebildete Schwenkantriebe 27 mit Druckluft versorgt, wodurch durch Innendruckbeaufschlagung der Kontraktionsschläuche eine Kontraktion stattfindet, wodurch eine lineare Abtriebsbewegung entsteht, die über Kopplungsmittel in die Schwenkbewegungen der Greifelemente 19a-19c übertragen wird. Die Druckluftbeaufschlagung erfolgt an allen drei Gelenkeinheiten 16a-16c gleichzeitig. Der hierdurch zu erzielende Raumgriff ist auch als zentrisch paralleler Raumgriff zu bezeichnen, da die Greifelemente 19a-19c in radialer Richtung bezüglich der Längsachse des Greifantriebs bzw. dem Greifzentrum 21 verlagert werden und sich die aktiven Wirkflächen 29 der Greifelemente stets in paralleler Stellung bezüglich der Längsachse befinden.

Werden die Schwenkantriebe bei der Greifbewegung der Gelenkeinheiten nicht mit Druck beaufschlagt, so findet eine Schwenkbewegung der Greifelemente 19a-19c nicht statt. In diesem Fall wird die Schwenkbewegung der Gelenkeinheiten 16a-16c auch auf die aktiven Wirkflächen übertragen, deren Orientierung sich also bezüglich der Längsachse 31 ändert.

Alternativ zum zentrischen Raumgriff ist auch ein in einer nicht dargestellten Alternative ein paralleler Raumgriff dadurch zu erzielen, dass die Gelenkeinheiten 16a-16c mittels der Positioniermittel umgruppiert werden, so dass sie nicht mehr zentrisch, also radial zum Greifzentrum hin oder von diesem weg schwenken. Dies wird dadurch erzielt, dass zwei der drei Gelenkeinheiten 16a, 16b in ihrer Orientierung verändert werden, in dem sie jeweils an den Gelenken 33a, 33b um die parallel zur Längsachse des Greifzentrums ausgerichtete Schwenkachse verschwenkt werden, so dass die Arbeitsebenen der Greifelemente 19a-19c parallel versetzt zueinander ausgerichtet sind. Die Greifelemente 19a-19c können dann auch wieder bei Druckbeaufschlagung der zugeordneten Schwenkantriebe 27 synchron mit verschwenkt werden oder auch nicht, falls keine Druckluftbeaufschlagung erfolgt, was zu den zuvor beschriebenen Griffarten führt.

Wie beispielsweise in Figur 1 gezeigt können zur Gewichtsersparnis einzelne Getriebeglieder oder auch sämtliche Getriebeglieder einer jeweiligen Gelenkeinheit mit Material-Ausmagerungen 32 versehen sein.

## Patentansprüche

1. Greifeinrichtung zum Greifen von Objekten (12), mit wenigstens einer Krafteinleitungsschnittstelle (13), an der ein Greifantrieb (14) zur Greifkrafterzeugung ankoppelbar oder angekoppelt ist, und mit einem Gelenkgetriebe (15), das mehrere Gelenkeinheiten (16a-16c) aufweist, die jeweils zwei Getriebeglieder (17a-17h) und drei Gelenke (18a-18i) aufweisen, wobei an einem der Getriebeglieder (17a-17h) ein Greifelement (19a-19c) anordenbar oder angeordnet ist, das in einer Arbeitsebene (22a-22c) eine Schwenkbewegung ausführt, wenn durch Einleiten einer Antriebskraft die Gelenke (18a-18i) ihre Relativposition zueinander ändern, wobei das Gelenkgetriebe (15) wenigstens drei Gelenkeinheiten (16a-16c) aufweist, die derart um ein Greifzentrum (21) herum gruppiert sind, dass die wenigstens drei Arbeitsebenen (22a-22c) ihrer Greifelemente (19a-19c) winkelig und radial bezüglich des Greifzentrums (21) oder parallel versetzt zueinander ausgerichtet sind, wobei die Gelenkeinheiten (16a-16c) derart mechanisch miteinander gekoppelt sind, dass die Greifelemente (19a-19c) in ihren Schwenkbewegungen synchronisiert sind, und wobei die Greifelemente (19a-19c) jeweils um ein Schwenkgelenk (26a-26c) schwenkbar am zugeordneten Getriebeglied (17) angeordnet sind, **dadurch gekennzeichnet, dass** die Greifelemente (19a-19c) über eine Schwenksteuerung derart ansteuerbar sind, dass bei einer Greifbewegung der jeweiligen Gelenkeinheit (16a-16c) wahlweise eine relative Verschwenkung zwischen Greifelement (19a-19c) und Getriebeglied (17a-17h) blockiert oder ermöglicht ist, wobei im letztgenannten Fall insbesondere eine Verschwenkung zwischen Greifelement (19a-19c) und zugeordnetem Getriebeglied (17) derart möglich ist, dass das Greifelement (19a-19c) nach Art einer Parallelverschiebung ohne Änderung der Orientierung bezüglich des Greifzentrums (21) verschwenkbar ist.

2. Greifeinrichtung nach Anspruch 1, **dadurch gekennzeichnet, dass** die wenigstens drei Gelenkeinheiten (16a-16c) gleichmäßig verteilt um das Greifzentrum (21) herum gruppiert sind.

3. Greifeinrichtung nach Anspruch 1 oder 2, **dadurch gekennzeichnet, dass** die Getriebeglieder (17a-17h) einander benachbarter Gelenkeinheiten (16a-16c) gemeinsam eine Art Watt'sche oder Stephenson'sche Kette bilden.

4. Greifeinrichtung nach einem der vorhergehenden Ansprüche, **dadurch gekennzeichnet, dass** genau drei Gelenkeinheiten (16a-16c) vorgesehen sind, die gemeinsam ein Dreistandskoppelgetriebe bilden.

5. Greifeinrichtung nach einem der vorhergehenden Ansprüche, **dadurch gekennzeichnet, dass** die beiden Getriebeglieder (17a-17h) und die drei Gelenke (18a-18i) einer jeweiligen Gelenkeinheit gemeinsam einen Kniehebeltrieb bilden, wobei von den Gelenken (18a-18i) eines als mittleres Gelenk (18b, 18e, 18h) zur gelenkigen Verbindung der beiden Getriebeglieder (17a-17h) und die beiden anderen Gelenke als äußere Gelenke (18a, 18c, 18d, 18f, 18g, 18i)zur gelenkigen Anbindung an andere Komponenten der Greifeinrichtung (11) ausgebildet sind, wobei bei Einleitung einer Antriebskraft der Abstand der beiden äußeren Gelenke (18a, 18c, 18d, 18f, 18g, 18i) zueinander veränderbar ist.

6. Greifeinrichtung nach Anspruch 5, **dadurch gekennzeichnet, dass** von den äußeren Gelenken (18a, 18c, 18d, 18f, 18g, 18i) eines ortsfest und das andere relativ zu diesem beweglich angeordnet ist.

7. Greifeinrichtung nach einem der vorhergehenden Ansprüche, **dadurch gekennzeichnet, dass** die Schwenksteuerung derart ausgebildet ist, dass die Greifelemente (19a-19c) unabhängig voneinander ansteuerbar sind.

8. Greifeinrichtung nach einem der vorhergehenden Ansprüche, **dadurch gekennzeichnet, dass** die Schwenksteuerung wenigstens einen Schwenkantrieb (27) zur Einleitung einer Schwenkbewegung auf das wenigstens eine Greifelement (19a-19c) aufweist, wobei vorzugsweise jedem Greifelement (19a-19c) ein Schwenkantrieb (27) zugeordnet ist.

9. Greifeinrichtung nach Anspruch 8, **dadurch gekennzeichnet, dass** der Schwenkantrieb (27) an der Gelenkeinheit (16a-16c) angeordnet ist.

10. Greifeinrichtung nach einem der vorhergehenden Ansprüche, **dadurch gekennzeichnet, dass** der Greifantrieb (14) im Greifzentrum (21) angeordnet ist.

11. Greifeinrichtung nach einem der vorhergehenden Ansprüche, **dadurch gekennzeichnet, dass** es sich bei dem Greifantrieb (14) und/oder dem wenigstens einen Schwenkantrieb (27) um einen Linearantrieb, insbesondere Kontraktionsantrieb handelt.

12. Greifeinrichtung nach einem der vorhergehenden Ansprüche, **dadurch gekennzeichnet, dass** die Komponenten des Gelenkgetriebes (15) zumindest teilweise aus
Leichtbaumaterial bestehen.

13. Greifeinrichtung nach einem der vorhergehenden Ansprüche, **dadurch gekennzeichnet, dass** wenigstens ein Getriebeglied (17a-17h) einer jeweiligen Gelenkeinheit (16a-16c) insbesondere schwammartige Material-Ausmagerungen (32) aufweist.

## Claims

1. Gripping device for gripping objects (12), comprising at least one force introduction interface (13) to which a gripping drive (14) for generating a gripping force can be or is coupled, and further comprising an articulation transmission (15) having a plurality of articulation units (16a-16c), each of which comprises two transmission members (17a-17h) and three joints (18a-18i), wherein on one of the transmission members (17a-17h) a gripping element (19a-19c) can be or is mounted, which performs a pivoting movement in a working plane (22a-22c) if the joints (18a-18i) change their position relative to one another as a result of the introduction of a driving force, wherein the articulation transmission (15) comprises at least three articulation units (16a-16c) which are grouped around a gripping centre (21) in such a way that the at least three working planes (22a-22c) of their gripping elements (19a-19c) are oriented at an angle and radially relative to the gripping centre (21) or with a parallel offset relative to one another, wherein the articulation units (16a-16c) are mechanically coupled to one another in such a way that the gripping elements (19a-19c) are synchronised in their pivoting movements, and wherein each of the gripping elements (19a-19c) is pivotably mounted on the associated transmission member (17), **characterised in that** the gripping elements (19a-19c) can be selected via a pivoting controller in such a way that, in a gripping movement of the respective articulation unit (16a-16c), a relative pivoting between a gripping element (19a-19c) and a transmission member (17a-17h) can optionally be blocked or enabled, wherein in the latter case in particular a pivoting between a gripping element (19a-19c) and the associated transmission member (17) is possible in such a way that the gripping element (19a-19c) can be pivoted in the manner of a parallel displacement without changing its orientation relative to the gripping centre (21).

2. Gripping device according to claim 1, **characterised in that** the at least three articulation units (16a-16c) are distributed evenly about the gripping centre (21).

3. Gripping device according to claim 1 or 2, **characterised in that** the transmission members (17a-17h) of adjacent articulation units (16a-16c) together form a kind of Watt or Stephenson chain.

4. Gripping device according to any of the preceding claims, **characterised in that** precisely three articulation units (16a-16c) are provided, which together form a three-column coupling mechanism.

5. Gripping device according to any of the preceding claims, **characterised in that** the two transmission members (17a-17h) and the three joints (18a-18i) of each articulation unit together form a toggle drive, wherein one joint (18b, 18e, 18h) of the joints (18a-18i) is designed as a central joint for the articulated connection of the two transmission members (17a-17h) and the two other joints (18a, 18c, 18d, 18f, 18g, 18i) are designed as outer joints for articulated connection to other components of the gripping device (11), the mutual distance of the two outer joints (18a, 18c, 18d, 18f, 18g, 18i) being adjustable on the introduction of a working force.

6. Gripping device according to claim 5, **characterised in that**, of the outer joints (18a, 18c, 18d, 18f, 18g, 18i), one is stationary and the other is movable relative thereto.

7. Gripping device according to any of the preceding claims, **characterised in that** the pivoting controller is designed such that the gripping elements (19a-10c) are independently selectable.

8. Gripping device according to any of the preceding claims, **characterised in that** the pivoting controller comprises at least one pivoting drive (27) for introducing a pivoting movement into the at least one gripping element (19a-10c), a pivoting drive (27) being preferably assigned to each gripping element (19a-10c).

9. Gripping device according to claim 8, **characterised in that** the pivoting drive (27) is mounted on the articulation unit (16a-16c).

10. Gripping device according to any of the preceding claims, **characterised in that** the gripping drive (14) is located in the gripping centre (21).

11. Gripping device according to any of the preceding claims, **characterised in that** the gripping drive (14) and/or the at least one pivoting drive (27) is/are a linear drive, in particular a contraction drive.

12. Gripping device according to any of the preceding claims, **characterised in that** the components of the articulation transmission (15) at least partially consist of a light-weight material.

13. Gripping device according to any of the preceding claims, **characterised in that** at least one transmission member (17a-17h) of each articulation unit (16a-16c) has weakened material areas (32) which are sponge-like in particular.

## Revendications

1. Dispositif de préhension servant à saisir des objets (12), comprenant au moins une interface d'application de force (13), à laquelle un entraînement de préhension (14) peut être couplé ou est couplé aux fins de la production de force de préhension, et comprenant un système d'engrenage articulé (15), qui présente plusieurs unités articulées (16a - 16c), qui présentent respectivement deux organes d'engrenage (17a - 17h) et trois articulations (18a - 18i), sachant qu'un élément de préhension (19a - 19c) peut être disposé ou est disposé au niveau d'un des organes d'engrenage (17a - 17h), lequel élément de préhension exécute un mouvement de pivotement dans un plan de travail (22a - 22c) lorsque, du fait de l'application d'une force d'entraînement, les articulations (18a - 18i) modifient leur position relative les unes par rapport aux autres, sachant que le système d'engrenage articulé (15) présente au moins trois unités articulées (16a - 16c), qui sont rassemblées tout autour d'un centre de préhension (21) de telle manière que les au moins trois zones de travail (22a - 22c) des éléments de préhension (19a - 19c) desdites unités articulées sont orientées de manière à former un angle et de manière radiale par rapport au centre de préhension (21) ou de manière décalée en parallèle les unes par rapport aux autres, sachant que les unités articulées (16a - 16c) sont couplées les unes aux autres de manière mécanique de telle manière que les mouvements de pivotement des éléments de préhension (19a - 19c) sont synchronisés, et sachant que les éléments de préhension (19a - 19c) sont disposés au niveau de l'organe d'engrenage (17) associé de manière à pouvoir pivoter respectivement autour d'une articulation de pivotement (26a - 26c), **caractérisé en ce que** les éléments de préhension (19a - 19c) peuvent être commandés de telle manière par l'intermédiaire d'une commande de pivotement que, lors d'un mouvement de préhension de l'unité articulée (16a - 16c) respective, un pivotement relatif entre l'élément de préhension (19a - 19c) et l'organe d'engrenage (17a - 17h) est bloqué ou rendu possible, sachant que dans le dernier cas, en particulier un pivotement entre l'élément de préhension (19a - 19c) et l'organe d'engrenage (17) associé est possible de telle manière que l'élément de préhension (19a - 19c) peut pivoter à la manière d'un déplacement par coulissement parallèle sans modification de l'orientation par rapport au centre de préhension (21).

2. Dispositif de préhension selon la revendication 1, **caractérisé en ce que** les au moins trois unités articulées (16a - 16c) sont regroupées tout autour du centre de préhension (21) de manière répartie uniformément.

3. Dispositif de préhension selon la revendication 1 ou 2, **caractérisé en ce que** les organes d'engrenage (17a - 17h) d'unités articulées (16a - 16c) adjacentes les unes aux autres forment conjointement une sorte de chaîne de Watt ou de Stephenson.

4. Dispositif de préhension selon l'une quelconque des revendications précédentes, **caractérisé en ce que** sont prévues précisément trois unités articulées (16a - 16c), qui forment conjointement un engrenage couplé à trois états.

5. Dispositif de préhension selon l'une quelconque des revendications précédentes, **caractérisé en ce que** les deux organes d'engrenage (17a - 17h) et les trois articulations (18a - 18i) d'une unité articulée respective forment conjointement une commande à levier coudé, sachant que parmi les articulations (18a - 18i), une articulation est réalisée sous la forme d'une articulation centrale (18b, 18e, 18h) servant à assembler de manière articulée les deux organes d'engrenage (17a - 17h) et que les deux autres articulations sont réalisées sous la forme d'articulations extérieures (18a, 18c, 18d, 18f, 18g, 18i) destinées à être reliées de manière articulée aux autres composants du dispositif de préhension (11), sachant qu'il est possible de modifier, lors de l'application d'une force d'entraînement, la distance entre les deux articulations extérieures (18a, 18c, 18d, 18f, 18g, 18i).

6. Dispositif de préhension selon la revendication 5, **caractérisé en ce que** parmi les articulations extérieures (18a, 18c, 18d, 18f, 18g, 18i), une articulation est immobile, tandis que l'autre articulation est disposée de manière mobile par rapport à cette dernière.

7. Dispositif de préhension selon l'une quelconque des revendications précédentes, **caractérisé en ce que** la commande de pivotement est réalisée de telle manière que les éléments de préhension (19a - 19c) peuvent être commandés indépendamment les uns des autres.

8. Dispositif de préhension selon l'une quelconque des revendications précédentes, **caractérisé en ce que** la commande de pivotement présente au moins un entraînement de pivotement (27) servant à imprimer un mouvement de pivotement sur l'au moins un élément de préhension (19a - 19c), sachant qu'un entraînement de pivotement (27) est associé de préférence à chaque élément de préhension (19a - 19c).

9. Dispositif de préhension selon la revendication 8, **caractérisé en ce que** l'entraînement de pivotement (27) est disposé au niveau de l'unité articulée (16a - 16c).

10. Dispositif de préhension selon l'une quelconque des revendications précédentes, **caractérisé en ce que** l'entraînement de préhension (14) est disposé dans le centre de préhension (21).

11. Dispositif de préhension selon l'une quelconque des revendications précédentes, **caractérisé en ce qu'**il s'agit dans le cas de l'entraînement de préhension (14) et/ou dans le cas de l'au moins un entraînement de pivotement (27) d'un entraînement linéaire, en particulier d'un entraînement de contraction.

12. Dispositif de préhension selon l'une quelconque des revendications précédentes, **caractérisé en ce que** les composants de l'engrenage articulé (15) sont constitués au moins en partie d'un matériau de construction légère.

13. Dispositif de préhension selon l'une quelconque des revendications précédentes, **caractérisé en ce qu'**au moins un organe d'engrenage (17a - 17h) d'une unité articulée (16a - 16c) respective présente en particulier des érosions de matériau (32) à la manière d'éponge.
